(19) Europäisches Patentamt
European Patent Office
Office européen des brevets

(11) **EP 2 846 062 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
***F16F 15/023*** *(2006.01)*     ***F16F 15/027*** *(2006.01)*

(21) Anmeldenummer: **13183754.4**

(22) Anmeldetag: **10.09.2013**

(54) **Schwingungsisolationssystem mit in Teilbereiche unterteilter Auflage sowie Verfahren zu dessen Regelung**

Vibration insulation system with support which is divided into sections, and method of controlling same

Système d'isolation contre les oscillations doté d'un appui divisé en zones partielles et son procédé de régulation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.03.2015 Patentblatt 2015/11**

(73) Patentinhaber: **Integrated Dynamics Engineering GmbH**
**65479 Raunheim (DE)**

(72) Erfinder:
• **Shatat-Herres, Moneer**
**65479 Raunheim (DE)**

• **Kropp, Dr. Peter**
**55130 Mainz (DE)**
• **Pabst, Mario**
**99974 Mühlhausen (DE)**

(74) Vertreter: **Blumbach Zinngrebe**
**Patentanwälte**
**Alexandrastrasse 5**
**65187 Wiesbaden (DE)**

(56) Entgegenhaltungen:
**EP-A1- 1 921 502     EP-A1- 2 295 829**
**JP-A- 2007 322 706     US-A1- 2002 140 921**

**Beschreibung**

Gebiet der Erfindung

Die Erfindung betrifft ein Schwingungsisolationssystem, insbesondere zur schwingungsisolierten Lagerung von Maschinen zur Herstellung von Halbleiterbauelementen, welches einen auf einer Auflage verfahrbaren Tisch umfasst. Weiter betrifft die Erfindung ein Verfahren zur Regelung eines Schwingungsisolationssystems.

Hintergrund der Erfindung

Bekannt sind Schwingungsisolationssysteme insbesondere auf Basis von pneumatischen Isolatoren, auch mit sogenanntem Stage-Feedforward. Die Isolatoren umfassen neben einem pneumatischen Lager Positions- oder Beschleunigungssensoren. Insbesondere wird über Positionssensoren die Höhe der schwingungsisoliert gelagerten Last am Ort des jeweiligen Isolators erfasst.

Bei der Stage-Feedforward-Regelung werden die Beschleunigungs- und Positionsinformationen vom verfahrbaren Tisch ("Stage") an die Regelung eines Schwingungsisolationssystem übermittelt, welche dann mittels Feedforward-Regelung Stellsignale für die Kraftaktoren des Schwingungsisolationssystems berechnet und ausgibt. Dabei werden die durch die verfahrbare Masse induzierten Krafteinleitungen in sechs Freiheitsgraden antizipiert und Kompensationskräfte bereitgestellt. Solche Regelungssysteme sind unabhängig und zusätzlich zur eigentlichen (Feedback- und Positions-)Regelung der Schwingungsisolation einsetzbar. Je nach Gewicht, Beschleunigung und Weg des verfahrbaren Tisches ändern sich die auftretenden Kräfte und bestimmen damit die notwendigen Kompensationskräfte. Die Kompensationskräfte werden in der Regel von Magnetaktoren aufgebracht.

Für viele Einsatzbereiche (z.B. im Handling von Systemen, die sich mit der Fertigung von Flat-Panels beschäftigen) sind die notwendigen Kompensationskräfte so groß geworden, dass sich der Einsatz von konventionellen Lorentz-Motoren (Permanentmagnete und Tauchspulensystem) nicht mehr wirtschaftlich realisieren lässt. Daher geht man dazu über, die Kraft anderweitig aufzubringen.

So beschreibt die Offenlegungsschrift EP 2 295 829 A1 (Integrated Dynamics Engineering GmbH) ein verbessertes aktives Schwingungsisolationssystem, wobei zur Aufbringung der Kompensationskräfte in vertikaler Richtung die Ventile des pneumatischen Subsystems, also die Ventile der pneumatischen Lager, verwendet werden. Die Ventile sind ansonsten nur zum Verfahren des Gesamtsystems auf einen bestimmten vertikalen Arbeitspunkt vorgesehen. Durch geeignete Regelungsansteuerung gelingt es jedoch auch, eine genügend große Reglerbandbreite an Krafteinleitung durch Druckänderungen so herbeizuführen, dass Kompensationskräfte in vertikaler Richtung im wesentlichen durch das pneumatische Subsystem bereitgestellt werden können. Insbesondere für die statischen Kräfte, die bei Lastverschiebungen länger gehalten werden müssen, sind nun keine Dauerströme an die Lorentzmotoren mehr notwendig, sondern werden durch eine Druckerhöhung in den Isolatoren erzeugt.

Für die notwendigen horizontalen Kompensationkräfte kann beispielsweise durch nicht-Newtonsche Flüssigkeiten in den Isolatoren, semi-aktive oder magneto-/elektro-rheologische Flüssigkeiten, ein mechanischer Kurzschluss zum Boden hergestellt werden, sobald ein Kraftstoß in horizontaler Richtung erzeugt wird. Damit gelingt es, auch größere Maschinen von Bodenschwingungen zu isolieren, sowie den Einfluss induzierter Kräfte durch verfahrbare Teile auf der gelagerten Masse zu minimieren und den zeitlichen Einfluss zu minimieren.

Mit wachsender Größe zu produzierender Geräte, beispielsweise Flatpanel-Displays, wird auch der Flächenbedarf, also die Standfläche, für die Schwingungsisolation größer.

Für den Produktionsprozess notwendig bleibt dabei, das Panel über die gesamte Fläche mittels verfahrbaren Tischen verschieben zu können, um jedes Teil des Werkstücks unter Werkzeugen positionieren lassen zu können. Damit wächst der notwendige Verfahrweg eines verfahrbaren Tisches und damit auch die Auflagefläche für den Verfahrweg.

Es ist dann kaum noch möglich, eine hinreichend große, einförmige Auflage für den verfahrbaren Tisch bereitzustellen, die sich nicht verformt.

Stattdessen ist es erforderlich, die Auflage in mehrere Teilbereiche zu unterteilen, die nur mäßig fest miteinander verbunden sind.

Es ist dann nicht nur wegen der verwendeten Massen nötig, mehr als die typischerweise drei oder vier Isolatoren zu verwenden. Stattdessen können je Teilbereich drei oder vier Isolatoren verwendet werden.

Falls aufgrund der hohen Masse eine entsprechend große Anzahl von Isolatoren vorhanden ist, werden Gruppen von Isolatoren so zusammengeschaltet und von einer Regelschleife mit Stellsignalen versorgt. So sind beispielweise vier Gruppen auf jeweils einer Mehrzahl von Isolatoren an den vier Ecken einer Auflage vorhanden, wobei die Isolatoren einer Gruppe jeweils gleich angesteuert werden.

Falls ein Stage-Feedforward-System zum Einsatz kommt, verwendet es Positions- und Beschleunigungssignale des verfahrbaren Tisches, um Stellsignale für die Ventile zu generieren, die typischerweise auf eine sog. pneumatische Achse gehen, in welcher logische Verknüpfungen von Isolatorgruppen zusammengefasst sind und physikalische Freiheitsgrade bezeichnen (X-rotation, Y-rotation und Z-translation). Grundsätzlich auch möglich ist jedoch die Erzeugung von Stellsignalen für einzelne Gruppen von Isolatoren oder Einzelisolatoren.

Jeder der Isolatoren weist ein Ventil für das pneumatische Lager auf, sowie mindestens einen Abstandssensor für die vertikale Richtung. Um Aktorgruppen zusammenzufassen, kann eine elektrische Leitung für jeweils Gruppen von Ventilen verlegt und mit dem gleichen Steuersignal angesteuert werden.

Eine Verbiegung der Struktur lässt sich allerdings mittels der Abstandssensoren nicht detektieren. Auch lässt sich Verbiegungen nicht entgegenwirken, wenn Teilbereiche übergreifend Isolatoren als Aktoren zusammengeschaltet werden.

Die Dokumente EP 1 921 829 A1 und US 2002/140921 A1 zeigen Schwingungsisolationssysteme. Das Dokument JP 2007 322706 A zeigt ein Lithografiegerät.

Aufgabe der Erfindung

Der Erfindung liegt demgegenüber die Aufgabe zugrunde, ein Schwingungsisolationssystem mit großer Standfläche bereit zustellen, bei welcher der Einfluss eines verfahrbaren Tisches minimiert wird.

Zusammenfassung der Erfindung

Die Aufgabe der Erfindung wird bereits durch ein Schwingungsisolationssystem sowie ein Verfahren zur Regelung eines Schwingungsisolationssystems nach einem der unabhängigen Ansprüche gelöst.

Bevorzugte Ausführungsformen und Weiterbildungen der Erfindung lassen sich dem Gegenstand der Unteransprüche entnehmen.

Die Erfindung betrifft ein Schwingungsisolationssystem, welches insbesondere zur schwingungsisolierten Aufnahme von Maschinen zur Bearbeitung von Halbleiterbauelementen vorgesehen ist. Insbesondere betrifft die Erfindung ein Schwingungsisolationssystem, welches bei der Herstellung von Display-Panels verwendet wird.

Das Schwingungsisolationssystem umfasst eine schwingungsisoliert gelagerte Auflage, welche in mehrere rigide Teilbereiche unterteilt ist, wobei die Teilbereiche auf in zumindest vertikaler Richtung wirksamen pneumatischen Lagern gelagert sind.

Die Auflage dient als Träger für einen verfahrbaren Tisch, auf dem beispielsweise ein Display-Panel auf der Auflage verfahren wird.

Die Auflage ist also in mehrere Teilbereiche unterteilt, wobei der Übergangsbereich zwischen den Teilbereichen eine geringere Steifigkeit hat, als die Teilbereiche selbst. Die Teilbereiche können mithin auch verbunden sein. Insbesondere ist vorgesehen, dass die Auflage aus mehreren Platten, aus beispielsweise Granit oder einem Verbundmaterial, besteht. Werden diese Platten verbunden, beispielsweise durch Verschrauben, so ist die Steifigkeit an der Verbindungsstelle geringer. Im Sinne der Erfindung ist eine Auflage aus mehreren Teilbereichen insbesondere also auch eine Auflage, welche aus mehreren Platten zusammengesetzt ist, die miteinander verbunden sind.

Der verfahrbare Tisch ist zumindest entlang der Erstreckungsrichtung der Teilbereiche verfahrbar.

Die pneumatischen Lager sind vorzugsweise Teil eines Isolators, welcher neben dem pneumatischen Lager zumindest einen Sensor zur Erfassung von Position und/oder Beschleunigung umfasst. Optional umfasst der Isolator auch elektrisch ansteuerbare Magnetaktoren zur aktiven Schwingungsisolation (z.B. Lorentz-Motoren). Diese können insbesondere einer aktiven Schwingungsisolation in horizontaler Richtung dienen. Es ist also insbesondere denkbar, neben der erfindungsgemäßen aktiven Schwingungsisolation in horizontaler Richtung eine aktive Schwingungsisolation in weiteren Raumrichtungen über Aktoren bereitzustellen.

Das Schwingungsisolationssystem umfasst des Weiteren Sensoren zur Erfassung der Höhe der Auflage an einer Mehrzahl von Stellen der Auflage. Vorzugsweise sind diese Sensoren in einen Isolator integriert, welcher jeweils auch ein pneumatisches Lager umfasst.

Weiter sind die pneumatischen Lager in Abhängigkeit der Signale der Sensoren zur Erfassung der Höhe der Auflage und gleichzeitig in Abhängigkeit der Position des verfahrbaren Tisches ansteuerbar. Unter "Ansteuern" wird verstanden, dass an die pneumatischen Lager ein Steuersignal geleitet wird, mittels dessen der Druck im Pneumatikteil und damit die Stützkraft verändert wird.

Bei der Feedforward-Regelung der pneumatischen Lager wird mithin nicht nur das Signal der Sensoren berücksichtigt, sondern auch die Position des verfahrbaren Tisches.

Dabei wird berücksichtigt, dass der Tisch über mehrere Teilbereiche der Auflage fährt, welche nicht starr miteinander verbunden sind.

Insbesondere sind pneumatische Lager eines Teilbereiches unabhängig von den pneumatischen Lagern eines angrenzenden Teilbereiches ansteuerbar.

Gemäß der Erfindung wird mithin die Auflage nicht als gleichförmige rigide Platte angesehen, sondern die Teilbereiche der Auflage werden individuell angesteuert.

Dabei gibt es zumindest Gruppen von Isolatoren bzw. pneumatischen Lagern, die mit einem Steuersignal angesteuert werden, welches unabhängig von dem Steuersignal sämtlicher anderer Teilbereiche ist.

Bei einer Ausführungsform der Erfindung ist die Auflage in zumindest drei rigide Teilbereiche unterteilt.

Weiter ist jeder der Teilbereiche auf zumindest vier pneumatischen Lagern schwingungsisoliert gelagert, welche typischerweise randseitig am jeweiligen Teilbereich angeordnet sind.

Die Lager eines jedes Teilbereiches werden unabhängig von den Lagern der weiteren Teilbereiche angesteuert. Vorzugsweise hat zumindest jeder Teilbereich einen Sensor zur Erfassung der Höhe.

Besonders bevorzugt ist jedem Lager, welches insbesondere Teil eines Isolators ist, ein Sensor zugeordnet.

Bei einer Weiterbildung der Erfindung weist das Schwingungsisolationssystem Mittel zur Abspeicherung eines Datensatzes in einer Lernphase auf, welche eine Höhenänderung an einer Mehrzahl an Stützstellen der Auflage bei einem Durchlauf des verfahrbaren Tisches repräsentiert. Dieses Fehlersignal wird dazu verwendet, die Parameter an den Stützstellen anzupassen. Diese Parameter werden dann während des Betriebs zur Berechnung eines Kompensationssignals zur Ansteuerung der pneumatischen Lager verwendet.

Die Auflage wird mithin in Stützstellen unterteilt und es kann über einen sog. Lerndurchlauf ein Fehlersignal generiert und als Datensatz abgespeichert werden, welches den Einfluss des verfahrbaren Tisches auf die Stützstellen repräsentiert.

Das Fehlersignal wird dann während der Lernphase dazu verwendet, die Parameter an den Stützstellen so anzupassen, dass das Fehlersignal minimiert wird. Die Parameter an den Stützstellen werden dann dazu verwendet, während des Normalbetriebs ein Kompensationssignal zu erzeugen.

Dieses Kompensationssignal kann sodann beim Betrieb des Schwingungsisolationssystems der herkömmlichen aktiven Regelung hinzuaddiert werden.

Die Erfindung betrifft des Weiteren ein Verfahren zur Regelung eines Schwingungsisolationssystems, welches einen verfahrbaren Tisch aufweist, der auf einer schwingungsisoliert gelagerten Auflage angeordnet ist, die in mehrere rigide Teilbereiche unterteilt ist und wobei mittels einer Mehrzahl von Sensoren die Höhe der Auflage an verschiedenen Stellen erfasst wird.

In Abhängigkeit der Position des verfahrbaren Tisches werden pneumatische Lager angesteuert, mittels der die rigiden Teilbereiche auf der Auflage abgestützt werden.

Bei einer bevorzugten Ausführungsform der Erfindung ist die Auflage in eine Mehrzahl von Stützstellen unterteilt, wobei in einer Lernphase ein Datensatz erzeugt wird, der eine Höhenänderung der Mehrzahl von Stützstellen beim Fahren des Tisches über die Auflage repräsentiert und wobei die pneumatischen Lager unter Berücksichtigung dieses Datensatzes angesteuert werden. Hierfür wird vorzugsweise ein Kompensationssignal generiert.

Beim Verfahren des Tisches in einer Richtung werden die nächstliegenden pneumatischen Lager in Abhängigkeit der Position des Tisches sowie angesteuert.

Zu der normalen Höhenregelung wird also das Kompensationssignal hinzu addiert. Dies hängt vorzugsweise sowohl von der Position des Tisches als auch von gespeicherten Parametern für eine Stützstelle ab. Über das Kompensationssignal werden die zu einer Stützstelle benachbarten pneumatischen Lager angesteuert.

Vorzugsweise erfolgt eine vertikale Schwingungsisolation allein über die pneumatischen Lager.

Bei einer Weiterbildung der Erfindung sind die Stützstellen zumindest teilweise zwischen den Sensoren angeordnet und es wird die Höhe der Auflage an diesen Stützstellen durch Interpolation der Höhe der Auflage am Ort benachbarter Sensoren bestimmt.

Beschreibung der Zeichnungen

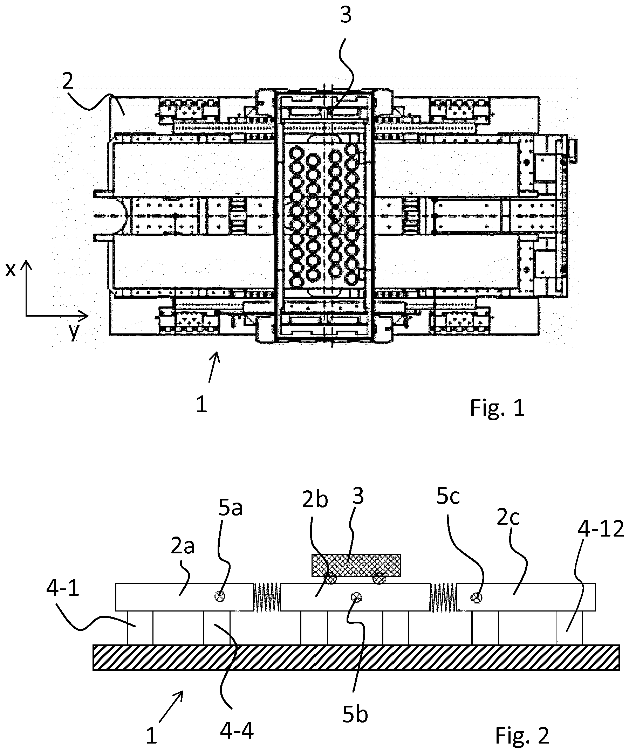

Die Erfindung soll im Folgenden, Bezug nehmend auf ein schematisch dargestelltes Ausführungsbeispiel anhand der Zeichnungen Fig. 1 bis Fig. 8, näher erläutert werden.

Fig. 1 zeigt eine schematische Ansicht eines Schwingungsisolationssystems von oben.

Das Schwingungsisolationssystem 1 umfasst eine Auflage 2, auf welcher ein verfahrbarer Tisch 3 angeordnet ist.

Der Tisch 3 dient beispielsweise der Auflage eines Substrats für ein Display-Panel.

Der Tisch 3 ist auf der Auflage 2 zumindest in y-Richtung verfahrbar, um das zu bearbeitende Bauelement zu verschiedenen Stationen zu fahren.

In diesem Ausführungsbeispiel kann der verfahrbare Tisch 3 auch in x-Richtung verfahren werden. Der verfahrbare Tisch 3 umfasst einen Ausgang, der mit einem Controller verbunden ist und über den die Position des Tisches 3 weiter gegeben wird (nicht dargestellt). Der Controller ist Teil eines Schwingungsisolationssystems.

Fig. 2 zeigt eine symbolische und schematische Seitenansicht eines derartigen Schwingungsisolationssystems 1.

Zu sehen ist, dass die Auflage in drei rigide Teilbereiche 2a, 2b, 2c unterteilt ist.

Die rigiden Teilbereiche 2a, 2b, 2c sind auf pneumatischen Lagern 4-1, 4-4, 4-12 schwingungsisoliert gelagert.

Dargestellt ist hier nur eine zweidimensionale Ansicht um das Verständnis der Erfindung zu erleichtern.

Fig. 3 zeigt eine weitere Ansicht der Unterteilung der Auflage 2 in die Teilbereiche 2a, 2b, 2c.

Fig. 4 zeigt die den in Fig. 3 dargestellten Teilbereichen 2a, 2b, 2c zugeordneten pneumatischen Lager bzw.

Isolatoren, wobei diese nummeriert sind.

Der Teilbereich 2a ruht auf den Lagern 1 bis 4, der Teilbereich 2b auf den Lagern 5 bis 8 und der Teilbereich 2c auf den Lagern 9 bis 12.

Würde man nunmehr, wie das herkömmlicher Weise der Fall ist, die Auflage 2 als Platte ansehen, so würden üblicherweise die Isolatoren 2, 3 und 6, die Isolatoren 7, 10 und 11, die Isolatoren 1, 4 und 5 und die Isolatoren 8, 9 und 12 zu jeweils einer Gruppe von Isolatoren zusammengefasst, welche mit dem gleichen Steuersignal betrieben werden.

Verfährt, wie in Fig. 2 dargestellt der Tisch 3, kann wegen der endlichen Steifigkeiten erwartet werden, dass sich die Teilbereiche 2a,2b,2c um einen jeweils eigenen Drehpunkt 5a,5b,5c bewegen und nicht nur um den Gesamtschwerpunkt des Gesamtsystems.

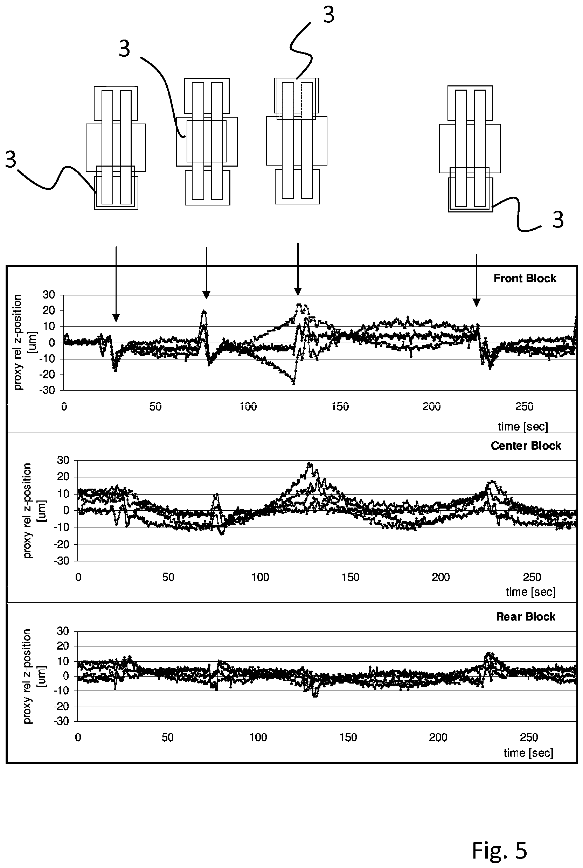

In Fig. 5 dargestellt ist das Signal der Sensoren der einzelnen Isolatoren bezogen auf unterschiedliche Positionen des verfahrbaren Tisches.

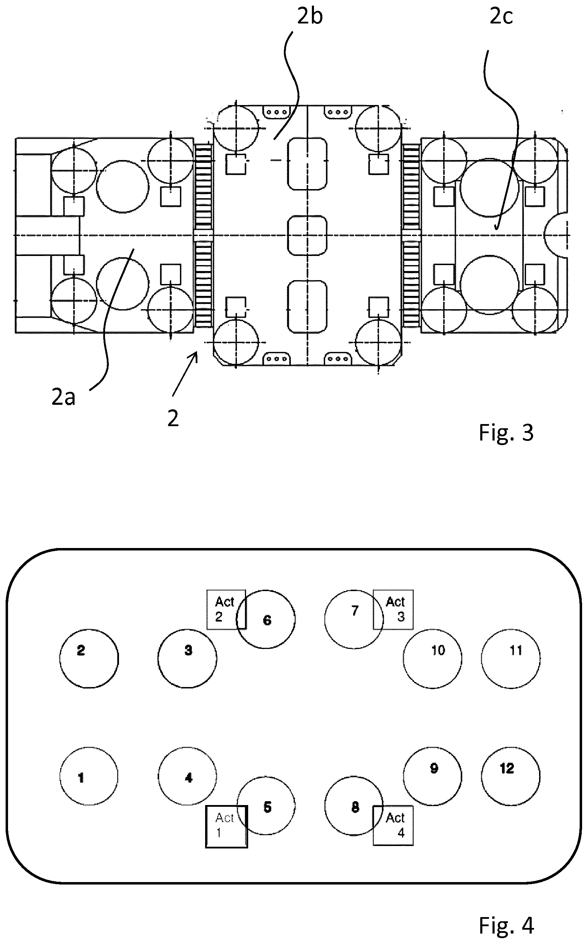

Die oberen Graphen zeigen das Signal der Sensoren an den Positionen 1 bis 4 in Fig. 4, die mittleren Graphen das Signal der Sensoren 5 bis 8 in Fig. 4 und die unteren Graphen das Signal der Sensoren 9 bis 12 in Fig. 4.

Es versteht sich, dass jeweils das Signal von vier Sensoren wiedergegeben ist, wobei es in dieser schematischen Darstellung zum Verständnis der Erfindung unerheblich ist, von welchem Sensor genau der einzelne Graph stammt.

Auf der y-Achse ist jeweils die Positionsabweichung in Mikrometern und auf der x-Achse die Zeit aufgetragen.

Die damit einhergehende Tischposition ist über die Pfeile zugeordnet.

Zu erkennen ist, dass die Positionsabweichungen an den einzelnen Teilbereichen von der Position des Tisches abhängen.

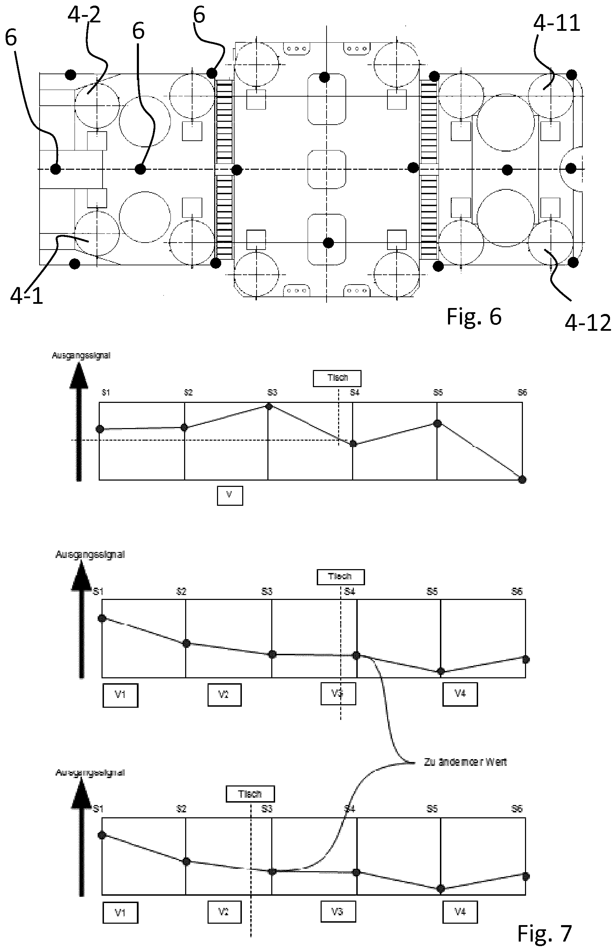

Eine beispielhafte Position von Stützstellen 6 ist in Fig. 6 dargestellt.

Fig. 6 entspricht von der Anordnung der Isolatoren her Fig. 3. Zu erkennen sind die pneumatischen Lager 4-1 bis 4-12, deren Position der Nummerierung in Fig. 4 entspricht.

Die Stützstellen 6 liegen nunmehr nicht mehr auf der Position des Lagers, sondern sind über die Auflage verteilt. Die pneumatischen Lager liegen am Ort der Sensoren. Es versteht sich, dass die Sensoren auch von den Lagern entfernt angeordnet sein können.

Die Stützstellen 6, welche nunmehr virtuell zu betrachten sind, und zwischen den Lagern und Sensoren liegen, dienen der Filterung des Signals.

Sollen für eine Stage-Feedforward-Regelung Aktoren verwenden werden, bieten sich nicht die Gruppierungen aus der Pneumatischen (Höhen-)Reglung an.

Stattdessen werden gemäß der Erfindung die Aktoren anders gruppiert und zusammengeschaltet, um als Aktoren für eine Kompensation der Kräfte aus dem Verfahrweg des Tisches verwendet werden zu können.

Der Tisch wird dabei vorzugsweise als eine am Schwerpunkt des Tisches anliegende Gewichtskraft an der jeweiligen Position angesehen.

Da die Steifigkeiten zwar endlich aber groß sind, ist davon auszugehen, dass die Drehpunkte nicht deckungsgleich zu den Massenschwerpunkten der Teilstrukturen sind, sondern deutlich in Richtung der Verbindungen der Teilbereiche 2a,2b,2c verschoben sind. Wie sich die Strukturen im Detail verhalten, lässt sich mittels der vorhandenen Abstandssensoren vermessen.

Der verfahrbare Tisch 3 kann sich in X- und Y-Richtung bewegen und liefert seine Positionsinformation

$$\vec{T}(t) = \begin{pmatrix} Xpos(t) \\ Ypos(t) \end{pmatrix}$$

an das Regelsystem. Dieses muss dann Stellsignale an die zur Verfügung stehenden Ventilausgänge $\vec{V}(t) = \begin{pmatrix} V_1 & V_2 & ... & V_N \end{pmatrix}$ liefern, so dass die Summe der quadratischen Abweichung der Höhen $H_i(t)$ von der jeweiligen Nulllage $N_i$ während des Verfahrens minimiert wird:

$$\int E(t)dt = \int \sum_{i=1}^{N} (H_i(t) - N_i)^2 dt = \min .$$

Da das Regelsystem zeitdiskret arbeitet, geht das Integral ebenfalls in eine Summe über:

$$\sum_t E(t) = \sum_t \sum_{i=1}^{N} (H_i(t) - N_i)^2 = \min ,$$

wobei typischerweise über eine Menge t von Zeitpunkten summiert wird, die über eine Bewegungstrajektorie des verfahrbaren Tisches reicht. Es wird also nach einer Funktion $F_i(\vec{T})$ gesucht, die aus den Positionsinformationen $\vec{T}$ des verfahrbaren Tisches einen Ventilausgang $V_i$ generiert:

$$V_i(t) = F_i(\vec{T}(t))$$
$$mit$$

$$\sum_t \sum_{i=1}^{N} (H_i(t) - N_i)^2 = \min$$

In Feedforward-Systemen sind die gesuchten Funktionen $F_i(\vec{T}(t))$ in der Regel solche, die linear von den Eingangsgrößen Xpos und Ypos abhängen, da es sich um einfache Lastverschiebungen handelt, deren Kraftwirkungen linear mit der Entfernung vom Massenschwerpunkt skaliert. Zusätzlich hängt die Funktion linear von der Position des Kraftaktors ab, weil die Kraftwirkung des Aktors mit der Länge des Hebelarms zum Massenschwerpunkt skaliert. Damit könnte die Funktionsschar als skalare Matrix geschrieben werden.

Im Falle des hier dargestellten mehrteilig beweglichen Systems sind die Funktionen deutlich komplexer, da sich Teilbereiche um unterschiedliche Drehpunkte bewegen können.

Es ist daher mit Hilfe einer linearen Funktion nicht mehr möglich, Ventilansteuerungssignale zu generieren, die das System hinreichend stabil in Position halten, wenn der Tisch verfährt. Auf Grund der komplexen schwingfähigen Geometrie dürfte der rein rechnerische Zugang zu diesem Problem ebenfalls nicht praktikabel sein. Dieses Problem kann aber auf folgende Weise gelöst werden:

Die Fläche, die durch den verfahrbaren Tisch befahren werden kann, sei unterteilt in endlich viele Quadranten.

Die Schnittpunkte der Quadranten können, aber müssen nicht mit den Orten der Ventile/Isolatoren $V_i$ übereinstimmen.

Auch ist es nicht erforderlich, dass die Quadranten gleichgroß, quadratisch oder gleichförmig sind.

Zur einfacheren Darstellung sei hier jedoch angenommen, die Quadranten seien quadratisch und gleichverteilt. Zur weiteren vereinfachten Darstellung sei hier auch nur eine Raumrichtung betrachtet (wie in Fig. 2 dargestellt).

Die Grundidee für ein Feedforward-Regelsystem zur Kompensation der Kraftwirkung eines verfahrbaren Tisches ist wie folgt:

Der Ventilausgang für ein Ventil eines Isolators sei nur von den Stützstellen der Quadranten abhängig definiert und für Positionen dazwischen sei eine Interpolation von den umgebenen Stützstellen zu verwenden. Dabei kann es in erster Näherung eine lineare Interpolation sein, aber auch eine Spline- oder andere Polynom-Interpolation kommt in Frage, um eine stetige Funktion an den Stützstellen zu gewährleisten.

Es ist dann für jeden Ventilausgang $V_i$ eine Matrix mit Skalaren vorzuhalten und zu definieren, die für die Berechnung des Ausgangssignals herangezogen wird, wie in Fig. 7 dargestellt. Aufgetragen ist das Ausgangsignal an verschiedenen Positionen des Tisches.

Um den Ausgang $V_i$ zu "berechnen", ist lediglich an der "Position" des Tisches der dazugehörige Matrixwert aus der skalaren Matrix auszulesen. Diese Parametermatrix $\vec{\vec{S}}$ lässt sich formal wieder entfalten und ebenfalls als Parametervektor interpretieren.

Im hier eindimensionalen Beispiel gemäß Fig. 2 ergibt sich ein Vektor von 6 Skalaren ( $\vec{S} = \left\{ S_j \right\}$ ).

Die Zwischenwerte werden beispielsweise durch lineare Interpolation zweier Stützstellen gewonnen. Die Optimierung der Ventil-Ansteuerungssignale in Abhängigkeit kontinuierlicher Positionswerte (Xpos/Ypos) wird damit reduziert auf die Optimierung endlich vieler Skalare. Daher ist die Funktion zur Berechnung eines Ausgangssignals $V_i$ wieder zurückgeführt auf einen Funktionalzusammenhang, der auf (wenigen) Parametern ($\vec{S}$) basiert. Es gilt also nun für alle $V_i$ jeweils einen optimalen Satz von jeweils dazugehörigen Parametern $\vec{S}_i$ zu finden, der die Höhendifferenz zwischen Sollhöhe und Isthöhe beim Verfahren des Tisches minimiert.

Die Ausgangssignale $V_i$ müssen dabei nicht identisch sein zu der Anzahl zur Verfügung stehender Ventile/Isolatoren, sondern können auch Gruppen von zusammen geschalteten Ventilen/Isolatoren bezeichnen. Dies bietet sich zum Beispiel dann an, wenn nur endlich viele (elektrische) Ausgänge zur Regelung zur Verfügung stehen. Am effektivsten dürfte allerdings die Verwendung sämtlicher Ventile sein, denn nur diese nutzen alle verfügbaren Freiheitsgrade aus. Es ist daher im Einzelfall Kosten gegen mögliche Performance abzuwägen.

Das hier dargestellte Matrixverfahren kann wie folgt vereinfacht werden.

Die Parametrisierung sämtlicher Parameter entzieht sich eigentlich einer manuellen Prozedur, da selbst bei nur 6x3 Stützstellen und 10 Ventil(-gruppen) schon 180 Parameter einzustellen sind.

Die Parametrisierung lässt allerdings auch deutlich vereinfachen und einer anschaulichen, manuellen Parametrisierung zugänglich machen:

Wie in Fig. 2 ersichtlich ist, ist ein Ventilausgang mit einem Isolator und damit mit einer lokal recht eingeschränkten Aktorwirkung verbunden. Die Position des Ventils bestimmt also, bei welcher Tischposition dieser Aktor seine Kraftwirkung sinnvollerweise aufbringen kann und soll.

Da die Aktoren wegen ihrer Ausdehnung (und wegen des Aufwands) nur endlich in der Anzahl und möglichst gut verteilt unterhalb der Last zu finden sind, teilt sich die zu betrachtende Fläche ganz natürlich in Bereiche auf, die den jeweiligen Aktoren zugeordnet werden kann. Damit ist nun nicht mehr für jeden Ventilausgang $V_i$ ein eigener Vektor $\vec{S}_i$ vorzuhalten, sondern lediglich ein Vektor $\vec{S}$ für alle $V_i$.

Für die Berechnung der Ausgangssignale $V_i$ werden die interpolierten Zwischenwerte aus dem Vektor $\vec{S}$ verwendet. Die Anpassung der Parameter kann experimentell erfolgen:

Wird der Tisch verfahren und ergibt sich dann, dass die Sollhöhe an einer bestimmten Stelle unterschritten wird, ist intuitiv klar, dass die Stützstellen im Vektor $\vec{S}$ um diese Position herum erhöht werden müssen. In Fig. 7 (Mitte) wäre dies die Stützstelle S4, in der darunter die Stützstelle S3. Der Tisch wird bei der Berechnung als Punktlast betracht, die am Schwerpunkt des Tisches in Abhängigkeit von seiner jeweiligen Position angeordnet ist.

Dem Fachmann ist es nun möglich, auch ein vollautomatisches, sog. adaptives Verfahren zur Anpassung der Parameter $\vec{S}$ zu implementieren.

Die Auswahl welche Parameter geändert werden sollen liegt vor, sowie eine Information darüber wie groß der Fehler ist (das sogenannte Fehlersignal).

Mit den Positionsinformationen des verfahrbaren Tisches als sog. Referenzsignal lässt sich nun mittels standardisierten Techniken zur Adaption von digitalen Filtern (z.B. dem Least-Mean-Square Algorithmus, RLS oder anderen) dieser Parameter automatisch anpassen. Nach Abschluss dieser "Lernphase" kann die Änderung der Parametrisierung eingefroren und gespeichert werden.

Es versteht sich, dass aber auch denkbar ist, dass regelmäßig oder ständig während des Betriebs ein Fehlersignal berechnet wird und die Parameter an den Stützstellen entsprechend ständig angepasst werden. Die Lernphase wird in diesem Fall also während des Betriebs fortgesetzt. Das Schwingungsisolationssystem kann sich so selbst adaptieren und sich insbesondere durch mechanischen Verschleiß ändernden Steifigkeiten der Bauteile anpassen.

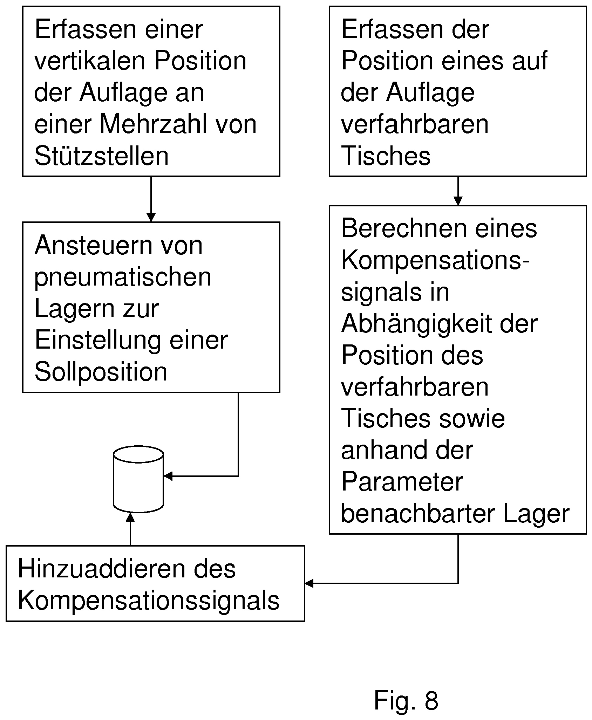

Bezugnehmend auf Fig. 8 soll anhand eines Flussdiagramms das erfindungsgemäße Verfahren näher erläutert werden.

Mittels einer Mehrzahl an Sensoren wird die vertikale Position der Auflage an einer Mehrzahl von Stützstellen erfasst. In der Regel sind die Positionssensoren an den pneumatischen Lagern angeordnet. Mithin entsprechen sich die Stützstellen der pneumatischen Lager und der Sensoren.

Die pneumatischen Lager werden zur Einstellung einer Sollposition angesteuert.

Es ist dabei insbesondere auch vorgesehen, dass der Einfluss einer Positionsänderung an einem Lager auf die Position der Auflage an den anderen Lagern berücksichtigt wird. Weiter können auch Bodenschwingungen im Sinne einer Feedforward-Regelschleife erfasst werden und über eine Ansteuerung der pneumatischen Lager kann der Schwingung entgegengewirkt werden. Eine derartige Regelung zur vertikalen Schwingungsisolation ist grundsätzlich bekannt.

Gemäß der Erfindung wird die Position eines auf der Auflage verfahrbaren Tisches erfasst. Basierend auf der Position des Tisches sowie auf Parametern, die der Position der jeweiligen Stützstelle entsprechen, wird ein Kompensationssignal berechnet. In diese Parameter geht insbesondere die Charakteristik der Auflage ein, welche nicht als starre Platte betrachtet wird, da diese in mehrere rigide Teilbereiche unterteilt ist, die miteinander verbunden sind.

Das Kompensationssignal wird dem herkömmlichen Signal zur Höhenkontrolle hin zuaddiert.

So ist auf einfache Weise eine wesentlich verbesserte Schwingungsisolation möglich.

Wesentlich für die Erfindung ist, dass die pneumatischen Lager unter den verschiedenen Teilbereichen der Auflage zumindest teilweise jeweils unabhängig voneinander angesteuert werden. Die Lager werden mithin nicht in Gruppen zusammengefasst und so betrachtet, als ob diese an den Ecken der Auflage liegen, sondern die Teilbereiche der Auflage werden individuell betrachtet und individuell angesteuert.

## Patentansprüche

1. Schwingungsisolationssystem (1), umfassend eine schwingungsisoliert gelagerte Auflage (2), welche in mehrere rigide Teilbereiche (2a,2b,2c) unterteilt ist, welche auf in zumindest vertikaler Richtung wirksamen pneumatischen Lagern (4) gelagert sind, wobei die Auflage (2) als Träger für einen verfahrbaren Tisch (3) dient, weiter umfassend Sensoren zur Erfassung der Höhe der Auflage (2) an einer Mehrzahl von Stellen der Auflage (2), wobei die pneumatischen Lager (4) in Abhängigkeit der Signale der Sensoren zur Erfassung der Höhe der Auflage (2) und gleichzeitig in Abhängigkeit der Position des verfahrbaren Tisches (3) ansteuerbar sind, **dadurch gekennzeichnet, dass** der Übergangsbereich zwischen den Teilbereichen eine geringere Steifigkeit hat, als die Teilbereiche selbst und sich die Teilbereiche (2a,2b,2c) beim Verfahren des Tisches (3) um einen jeweils eigenen Drehpunkt (5a,5b,5c) und nicht nur um einen Gesamtschwerpunkt des Gesamtsystems bewegen.

2. Schwingungsisolationssystem nach dem vorstehenden Anspruch, **dadurch gekennzeichnet, dass** die rigiden Teilbereiche (2a,2b,2c) miteinander verbunden sind.

3. Schwingungsisolationssystem nach einem der vorstehenden Ansprüche, **dadurch gekennzeichnet, dass** die pneumatischen Lager (4) eines Teilbereiches (2a,2b,2c) unabhängig von den pneumatischen Lagern eines angrenzenden Teilbereiches ansteuerbar sind.

4. Schwingungsisolationssystem nach einem der vorstehenden Ansprüche, **dadurch gekennzeichnet, dass** jeder Teilbereich (2a,2b,2c) zumindest einen Sensor zur Erfassung der Höhe aufweist.

5. Schwingungsisolationssystem nach einem der vorstehenden Ansprüche, **dadurch gekennzeichnet, dass** an den pneumatischen Lagern (4) Magnetaktoren angeordnet sind.

6. Schwingungsisolationssystem nach einem der vorstehenden Ansprüche, **dadurch gekennzeichnet, dass** das Schwingungsisolationssystem Mittel zur Abspeicherung eines Datensatzes in einer Lernphase aufweist, welcher eine Höhenänderung an einer Mehrzahl an Stützstellen (6) der Auflage bei einem Durchlauf des verfahrbaren Tisches (3) repräsentiert.

7. Schwingungsisolationssystem nach einem der vorstehenden Ansprüche, **dadurch gekennzeichnet, dass** die Auflage (2) in zumindest drei rigide Teilbereiche (2a,2b,2c) unterteilt ist.

**8.** Schwingungsisolationssystem nach dem vorstehenden Anspruch, **dadurch gekennzeichnet, dass** jeder der Teilbereiche auf zumindest vier pneumatischen Lagern (4) schwingungsisoliert gelagert ist, wobei die Lager eines Teilbereiches unabhängig von den Lagern der weiteren Teilbereiche angesteuert werden.

**9.** Verfahren zur Regelung eines Schwingungsisolationssystems (1), insbesondere eines Schwingungsisolationssystems nach einem der vorstehenden Ansprüche, wobei das Schwingungsisolationssystem (1) einen verfahrbaren Tisch (3) aufweist, der auf einer schwingungsisoliert gelagerten Auflage (2) angeordnet ist, die in mehrere rigide Teilbereiche (2a, 2b,2c) unterteilt ist, wobei mittels einer Mehrzahl von Sensoren die Höhe der Auflage (2) an verschiedenen Stellen erfasst wird, und in Abhängigkeit der Position des verfahrbaren Tisches (2) pneumatische Lager (4) angesteuert werden, mittels der die rigiden Teilbereiche (2a,2b,2c) auf der Auflage (2) abstützt werden, **dadurch gekennzeichnet, dass** der Übergangsbereich zwischen den Teilbereichen eine geringere Steifigkeit hat, als die Teilbereiche selbst und sich die Teilbereiche (2a,2b,2c) beim Verfahren des Tisches (3) um einen jeweils eigenen Drehpunkt (5a, 5b,5c) und nicht nur um einen Gesamtschwerpunkt des Gesamtsystems bewegen.

**10.** Verfahren zur Regelung eines Schwingungsisolationssystems nach Anspruch 9, **dadurch gekennzeichnet, dass** die Auflage (2) in eine Mehrzahl von Stützstellen (6) unterteilt wird, wobei in einer Lernphase ein Datensatz erzeugt wird, der eine Höhenänderung der Mehrzahl von Stützstellen (6) beim Fahren des Tisches über die Auflage repräsentiert, wobei sodann die pneumatischen Lager (4) unter Berücksichtung dieses Datensatzes angesteuert werden.

**11.** Verfahren zur Regelung eines Schwingungsisolationssystems nach Anspruch 10, **dadurch gekennzeichnet, dass** der Datensatz ein errechnetes Kompensationssignal umfasst, welches von der Position des Tisches und den benachbarten pneumatischen Lagern abhängt und welches einem Signal zur Höhenkontrolle hinzuaddiert wird.

**12.** Verfahren zur Regelung eines Schwingungsisolationssystems nach einem der Ansprüche 9 bis 11, **dadurch gekennzeichnet, dass** zur Berechnung von Signalen zur Regelung der pneumatischen Lager (4) die Auflage (2) in eine Mehrzahl von Stützstellen unterteilt wird und beim Verfahren des Tisches (3) in einer Richtung die einem Schwerpunkt des Tisches nächstliegenden pneumatischen Lager angesteuert werden.

**13.** Verfahren zur Regelung eines Schwingungsisolationssystem nach einem der Ansprüche 9 bis 12, **dadurch gekennzeichnet, dass** Stützstellen (6) zumindest teilweise zwischen den Sensoren angeordnet sind, wobei die Höhe der Auflage (2) an diesen Stützstellen (6) durch Interpolation der Höhe der Auflage am Ort benachbarter Sensoren bestimmt wird.

**Claims**

**1.** A vibration isolation system (1), comprising:

an anti-vibration mounted support (2) which is divided into a plurality of rigid sections (2a, 2b, 2c) which are mounted on pneumatic bearings (4) that are effective at least in a vertical direction, wherein
said support (2) serves to support a displaceable stage (3); further comprising sensors for detecting a height of the support (2) at a plurality of points of the support (2); wherein the pneumatic bearings (4) are controllable based on the signals from the sensors for detecting the height of the support (2) and at the same time based on the position of the displaceable stage (3);
**characterized in that** the intersection area between the sections has a lower stiffness than the sections and **in that**, when the stage (3) is displaced, each of the sections (2a, 2b, 2c) will move around a respective own pivotal point (5a, 5b, 5c) and not only around an overall center of mass of the entire system.

**2.** The vibration isolation system as claimed in the preceding claim, wherein the rigid sections (2a, 2b, 2c) are coupled with each other.

**3.** The vibration isolation system as claimed in any of the preceding claims, wherein the pneumatic bearings (4) of a section (2a, 2b, 2c) are controllable independently from the pneumatic bearings of an adjacent section.

**4.** The vibration isolation system as claimed in any of the preceding claims, wherein each section (2a, 2b, 2c) comprises at least one sensor for detecting the height.

**5.** The vibration isolation system as claimed in any of the preceding claims, wherein magnetic actuators are arranged on the pneumatic bearings (4).

**6.** The vibration isolation system as claimed in any of the preceding claims, wherein the vibration isolation system comprises means for storing a data set during a learning phase, which data set represents a change in height at a plurality of support points (6) of the support during one pass of the displaceable stage (3).

7. The vibration isolation system as claimed in any of the preceding claims, wherein the support (2) is divided into at least three rigid sections (2a, 2b, 2c).

8. The vibration isolation system as claimed in the preceding claim, wherein each of the sections is anti-vibration mounted on at least four pneumatic bearings (4), wherein the bearings of a section are controlled independently from the bearings of the other sections.

9. A method for controlling a vibration isolation system (1), in particular a vibration isolation system as claimed in any of the preceding claims, wherein the vibration isolation system (1) comprises a displaceable stage (3) arranged on an anti-vibration mounted support (2) which is divided into a plurality of rigid sections (2a, 2b, 2c); the method comprising:

detecting the height of the support (2) at different points thereof using a plurality of sensors; and controlling pneumatic bearings (4) which support the rigid sections (2a, 2b, 2c) of the support (2) based on the position of the displaceable stage (2);
**characterized in that** the intersection area between the sections has a lower stiffness than the sections and wherein, when the stage (3) is displaced, each of the sections (2a, 2b, 2c) will move around a respective own pivotal point (5a, 5b, 5c) and not only around an overall center of mass of the entire system.

10. The method for controlling a vibration isolation system as claimed in claim 9, comprising
dividing the support (2) into a plurality of support points (6);
generating, in a learning phase, a data set which represents a change in height of the plurality of support points (6) during displacement of the stage over the support;
subsequently controlling the pneumatic bearings (4) while taking into account said data set.

11. The method for controlling a vibration isolation system as claimed in claim 10, wherein the data set includes a calculated compensation signal which is a function of the position of the stage and of the adjacent pneumatic bearings and which is added to a height control signal.

12. The method for controlling a vibration isolation system as claimed in any of the claims 9 to 11, comprising,
for calculating signals for controlling the pneumatic bearings (4), dividing the support (2) into a plurality of support points; and
when the stage (3) is displaced in any direction, controlling the pneumatic bearings closest to a center of mass of the stage.

13. The method for controlling a vibration isolation system as claimed in any of the claims 9 to 12, wherein at least part of the support points (6) are located between the sensors, wherein the height of the support (2) at these support points (6) is determined by interpolation of the height of the support at the location of adjacent sensors.

**Revendications**

1. Système d'isolation contre les vibrations (1), comprenant un appui (2) monté de manière à être isolé contre les vibrations, lequel est divisé en plusieurs parties rigides (2a, 2b, 2c), lesquelles sont montées sur des paliers pneumatiques (4) agissant dans une direction au moins verticale, l'appui (2) servant de support à une table (3) mobile, comprenant en outre des capteurs destinés à détecter la hauteur de l'appui (2) en une pluralité de points de l'appui (2), les paliers pneumatiques (4) peuvant être commandés en fonction des signaux des capteurs destinés à détecter la hauteur de l'appui (2) et simultanément en fonction de la position de la table mobile (3),
**caractérisé en ce que** la zone de transition entre les parties présente une rigidité inférieure à celle des parties elles-mêmes et les parties (2a, 2b, 2c), lors du déplacement de la table (3), se déplacent autour d'un point de rotation (5a, 5b, 5c) respectivement distinct et non uniquement autour d'un centre de gravité global de l'ensemble du système.

2. Système d'isolation contre les vibrations selon la revendication précédente, **caractérisé en ce que** les parties rigides (2a, 2b, 2c) sont reliées les unes aux autres.

3. Système d'isolation contre les vibrations selon l'une quelconque des revendications précédentes, **caractérisé en ce que** les paliers pneumatiques (4) d'une partie (2a, 2b, 2c) peuvent être commandés indépendamment des paliers pneumatiques d'une partie adjacente.

4. Système d'isolation contre les vibrations selon l'une quelconque des revendications précédentes, **caractérisé en ce que** chaque partie (2a, 2b, 2c) comprend au moins un capteur destiné à détecter la hauteur.

5. Système d'isolation contre les vibrations selon l'une quelconque des revendications précédentes, **carac-**

**térisé en ce que** des actionneurs magnétiques sont agencés sur les paliers pneumatiques (4).

6. Système d'isolation contre les vibrations selon l'une quelconque des revendications précédentes, le système d'isolation contre les vibrations étant **caractérisé en ce qu'**il comprend des moyens destinés à mettre en mémoire un ensemble de données au cours d'une phase d'apprentissage, lequel représente une modification de la hauteur en une pluralité de points d'appui (6) de l'appui lors d'un passage de la table mobile (3).

7. Système d'isolation contre les vibrations selon l'une quelconque des revendications précédentes, **caractérisé en ce que** l'appui (2) est divisé en au moins trois parties rigides (2a, 2b, 2c).

8. Système d'isolation contre les vibrations selon la revendication précédente, **caractérisé en ce que** chacune des parties est montée sur au moins quatre paliers pneumatiques (4) de manière à être isolée contre les vibrations, dans lequel les paliers d'une partie sont commandés indépendamment des paliers des autres parties.

9. Procédé de régulation d'un système d'isolation contre les vibrations (1), en particulier d'un système d'isolation contre les vibrations selon l'une quelconque des revendications précédentes, dans lequel le système d'isolation contre les vibrations (1) comprend une table mobile (3) qui est agencée sur un appui (2) monté de manière à être isolé des vibrations, qui est divisé en plusieurs parties rigides (2a, 2b, 2c), la hauteur de l'appui (2) étant détectée en plusieurs points au moyen d'une pluralité de capteurs, et des paliers pneumatiques (4), au moyens desquels les parties rigides (2a, 2b, 2c) sont en appui sur l'appui (2), peuvant être commandés en fonction de la position de la table mobile (2), **caractérisé en ce que** la zone de transition entre les parties présente une rigidité inférieure à celle des parties elles-mêmes et les parties (2a, 2b, 2c) lors du déplacement de la table (3) se déplacent autour d'un point de rotation (5a, 5b, 5c) respectivement distinct et non uniquement autour d'un centre de gravité global de l'ensemble du système.

10. Procédé de régulation d'un système d'isolation contre les vibrations selon la revendication 9, **caractérisé en ce que** l'appui (2) est divisé en une pluralité de points d'appui (6), dans lequel un ensemble de données, qui représente une modification de la hauteur de la pluralité de points d'appui (6) lors du déplacement de la table au-dessus de l'appui, est produit au cours d'une phase d'apprentissage, dans lequel les paliers pneumatiques (4) sont ensuite commandés en prenant en considération cet ensemble de données.

11. Procédé de régulation d'un système d'isolation contre les vibrations selon la revendication 10, **caractérisé en ce que** l'ensemble de données comporte un signal de compensation calculé, lequel dépend de la position de la table et des paliers pneumatiques voisins et lequel est ajouté à un signal pour le contrôle de la hauteur.

12. Procédé de régulation d'un système d'isolation contre les vibrations selon l'une quelconque des revendications 9 à 11, **caractérisé en ce que**, pour le calcul de signaux pour la régulation des paliers pneumatiques (4), l'appui (2) est divisé en une pluralité de points d'appui et, lors du déplacement de la table (3) dans une direction, ce sont les paliers pneumatiques les plus proches d'un centre de gravité de la table qui sont commandés.

13. Procédé de régulation d'un système d'isolation contre les vibrations selon l'une quelconque des revendications 9 à 12, **caractérisé en ce que** des points d'appui (6) sont agencés au moins en partie entre les capteurs, la hauteur de l'appui (2) en ces points d'appui (6) étant déterminée par interpolation de la hauteur de l'appui à l'endroit des capteurs voisins.

Fig. 1

Fig. 2

2b

2c

2a

2

Fig. 3

| | | | |
|---|---|---|---|
| | Act 2 | 6 | 7 | Act 3 |

Act 2   6        7   Act 3

2      3           10    11

1      4      5    8      9    12

Act 1                Act 4

Fig. 4

Fig. 5

Fig. 6

Fig. 7

Erfassen einer vertikalen Position der Auflage an einer Mehrzahl von Stützstellen

Erfassen der Position eines auf der Auflage verfahrbaren Tisches

Ansteuern von pneumatischen Lagern zur Einstellung einer Sollposition

Berechnen eines Kompensationssignals in Abhängigkeit der Position des verfahrbaren Tisches sowie anhand der Parameter benachbarter Lager

Hinzuaddieren des Kompensationssignals

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2295829 A1
- EP 1921829 A1
- US 2002140921 A1
- JP 2007322706 A